**Europäisches Patentamt**

**European Patent Office**

**Office européen des brevets**

(19)

(11) Numéro de publication : **0 287 407 B1**

(12)

# FASCICULE DE BREVET EUROPEEN

(45) Date de publication du fascicule du brevet :
**27.11.91 Bulletin 91/48**

(51) Int. Cl.⁵ : **G01F 15/18**

(21) Numéro de dépôt : **88400551.3**

(22) Date de dépôt : **09.03.88**

(54) **Dispositif de raccordement et de support d'un compteur d'eau.**

(30) Priorité : **13.03.87 FR 8703453**

(43) Date de publication de la demande :
**19.10.88 Bulletin 88/42**

(45) Mention de la délivrance du brevet :
**27.11.91 Bulletin 91/48**

(84) Etats contractants désignés :
**BE DE ES GB IT LU NL**

(56) Documents cités :
**EP-A- 0 210 933**
**CH-A- 327 420**
**CH-A- 345 750**
**FR-A- 2 461 235**
**GB-A- 772 158**
**US-A- 3 731 534**

(73) Titulaire : **MANUFACTURE D'APPAREILLAGE
ELECTRIQUE DE CAHORS**
**B.P.149 Regourd**
**F-46003 Cahors Cédex (FR)**

Titulaire : **LYONNAISE DES EAUX Société
Anonyme**
**52 rue de Lisbonne**
**F-75008 Paris (FR)**
Titulaire : **PERSOHN S.A.**
**Le Rey**
**F-33430 Bazas (FR)**

(72) Inventeur : **Rappart, Alain**
**Camp Del Roc**
**F-46230 Lalbenque (FR)**
Inventeur : **Loosdregt, Henri**
**44 rue de Lisbonne**
**F-75008 Paris (FR)**
Inventeur : **Persohn, Paul**
**"Les Cigales" Prechac**
**F-33730 Villandraut (FR)**
Inventeur : **Persohn, Philippe**
**14 bis Cours Gambetta**
**F-33430 Bazas (FR)**

(74) Mandataire : **Bouju, André**
**Cabinet André Bouju B.P. 6250**
**F-75818 Paris Cédex 17 (FR)**

## Description

La présente invention concerne un dispositif de raccordement et de support d'un compteur d'eau comprenant un tuyau d'arrivée d'eau au compteur et un tuyau de départ, ces tuyaux étant raccordés au compteur à l'aide de moyens pour permettre, interdire ou dériver le passage de l'eau.

Dans les réalisations connues, les compteurs d'eau sont munis à leurs extrémités opposées situées sur une ligne horizontale, d'un robinet d'arrêt raccordé à un tuyau d'arrivée et d'un tuyau de départ d'eau enfouis dans le sol à une certaine profondeur.

Ces installations sont logées dans des fosses creusées dans le sol et présentant une largeur suffisante pour pouvoir accéder au compteur et à ses divers accessoires tels que les robinets d'arrêt.

Compte tenu de la largeur de ces fosses, la réalisation de celles-ci est onéreuse, et impossible sur le domaine public.

Par ailleurs, ces installations posent un délicat problème de protection contre le gel. Ainsi, pour éviter le gel de l'eau dans les tuyaux d'arrivée et de départ de l'eau, on est obligé d'enfouir ces tuyaux profondément dans le sol, ce qui accroît le coût de la réalisation de la fosse et rend l'accès au compteur malaisé.

Pour remédier à cet inconvénient, on a décrit dans le brevet européen 0116005 un dispositif qui permet de maintenir les tuyaux d'arrivée et de départ d'eau reliés au compteur à une température supérieure à 0°C. Ce dispositif comprend des caloducs disposés en condition d'échange thermique avec les tuyaux d'arrivée et de départ d'eau, caloducs enfouis dans le sol dans lequel ils prélèvent la chaleur nécessaire.

Cette réalisation est relativement onéreuse et difficilement réparable. De plus, cette réalisation ne résoud pas le problème posé par la largeur excessive de la fosse résultant de l'utilisation d'un compteur à arrivée et départ d'eau disposés sur une ligne horizontale

On connaît selon l'EP-A-0210933 un ensemble compteur d'eau-support. La face du compteur d'eau destinée à être raccordée au support comprend une ouverture d'arrivée d'eau et de départ d'eau. Ces ouvertures disposées l'une à côté de l'autre sont raccordées à un tuyau d'arrivée et de départ d'eau montés sensiblement parallèles dans ledit support.

Le montage du compteur d'eau sur le support est tel que le compteur d'eau puisse être mis en rotation suivant un axe sensiblement vertical passant entre les deux tuyaux.

Mais cette réalisation ne comprend pas de moyens de raccordement au compteur pour permettre, interdire ou dériver le passage de l'eau, qui soient tels que l'on puisse par exemple enlever échanger, réparer ou interdire sur un compteur, sans craindre le risque de gel du reste de l'installation hydraulique.

Le but de la présente invention est de remédier aux inconvénients des réalisations connues en créant un dispositif de raccordement et de support d'un compteur d'eau qui soit compact, facilement accessible, ne nécessitant qu'une fosse de dimensions réduites, pouvant être installé sur le domaine public et facilement protégé contre le gel.

Le dispositif de raccordement et de support d'un compteur d'eau visé par l'invention comprend un tuyau d'arrivée d'eau au compteur et un tuyau de départ, ces tuyaux étant raccordés au compteur à l'aide de moyens pour permettre, interdire ou dériver le passage de l'eau. Le compteur d'eau comprend une ouverture d'arrivée d'eau et de départ d'eau disposées l'une à côté de l'autre sur une face destinée à être raccordée à un support dudit compteur, ce support comportant une embase fixe dans laquelle sont montés sensiblement parallèlement l'un à l'autre, un tuyau d'arrivée et un tuyau de départ de l'eau. Le montage du compteur d'eau sur le support est tel que le compteur d'eau puisse être mis en rotation suivant un axe sensiblement vertical passant entre les deux tuyaux.

Suivant l'invention, ce dispositif est caractérisé en ce que cette embase est surmontée par une platine qui comporte deux conduits de passage d'eau destinés à être raccordés respectivement aux ouvertures d'arrivée et de départ du compteur, cette platine étant montée en rotation sur ladite embase suivant un axe sensiblement vertical passant entre les deux tuyaux, entre une position dans laquelle les conduits de passage d'eau ménagés dans la platine sont disposés dans l'axe des tuyaux d'arrivée et de départ de l'eau et une position dans laquelle ces conduits de passage d'eau sont décalés angulairement par rapport aux tuyaux d'arrivée et de départ de l'eau de façon à obturer le passage de l'eau entre ces tuyaux, le compteur servant de moyen de préhension pour commander le circuit d'eau et pouvant se déplacer en rotation d'un angle tel qu'il se produise une obturation du passage de l'eau entre lesdits tuyaux.

Ainsi, pour couper l'arrivée de l'eau au compteur, il suffit de tourner autour d'un axe vertical, l'ensemble constitué par le compteur fixé sur la platine par rapport à l'embase fixe. Le compteur sert ainsi de moyen de préhension pour commander la fermeture et l'arrivée de l'eau.

Etant donné que les moyens d'obturation de l'arrivée de l'eau sont disposés sous le compteur et sont intégrés à la platine et à l'embase qui porte elle-même les tuyaux d'arrivée et de départ d'eau, l'ensemble est très compact et présente un encombrement en largeur réduit, ce qui diminue considérablement le coût de la fosse qui doit être réalisée pour le contenir.

Selon une version avantageuse de l'invention, la platine comporte dans l'axe de sa rotation un alésage dans lequel est monté un manchon dont l'extrémité adjacente à la face de la platine comprend un épaulement annulaire en appui contre un épaulement complémentaire ménagé dans l'alésage de cette platine, un taraudage permettant de recevoir un bouchon de diamètre supérieur à celui de l'alésage du manchon, l'autre extrémité de ce manchon étant vissée dans un taraudage ménagé dans l'embase.

Selon une version préférée de l'invention, l'embase comprend dans le prolongement inférieur de l'axe de rotation de la platine, un alésage dans lequel est emboîté un tube fourreau destiné à être enfoui dans le sol et à recevoir un caloduc pouvant être introduit dans le manchon après enlèvement du bouchon.

Selon une autre disposition de l'invention, la cavité s'étendant de l'extrémité inférieure du tube fourreau à la face inférieure du bouchon contient un tube caloduc dont l'extrémité inférieure est en condition d'échange thermique avec le sol et dont l'extrémité supérieure est en condition d'échange thermique avec l'embase, le manchon, la platine, et le bouchon qui le coiffe et permet de le remplacer.

De préférence également le bouchon crée un lien thermique entre l'extrémité du caloduc et la face du compteur comportant les ouvertures d'arrivée et de départ d'eau.

Ces dispositions permettent une mise en place facile du caloduc et d'excellentes conditions d'échange thermique entre celui-ci, l'embase et la platine. De plus, le manchon sert simultanément de pivot pour guider la rotation de la platine, de moyen de fixation de celle-ci sur l'embase et de moyen pour transmettre la chaleur entre le caloduc et la platine.

Grâce à ces dispositions, le compteur peut se trouver au-dessus du sol, ce qui facilite son accessibilité et diminue le coût de son implantation.

D'autres particularités et avantages de l'invention apparaîtront encore dans la description ci-après.

Aux dessins annexés donnés à titre d'exemples non limitatifs :

— la figure 1 est une vue en élévation et en coupe longitudinale partielle du compteur et en coupe longitudinale de la platine et de l'embase portant les tuyaux d'arrivée et de départ d'eau,

— la figure 2 est une vue en coupe longitudinale à plus grande échelle de la platine et de l'embase,

— la figure 3 est une vue en élévation de la platine,

— la figure 4 est une vue en coupe diamétrale des deux anneaux en alumine et de leurs joints d'étanchéité,

— la figure 5 est une vue en plan de dessus de l'anneau en alumine supérieur,

— la figure 6 est une vue en plan de dessus de l'anneau en alumine inférieur,

— la figure 7 est une vue en élévation de l'embase,

— la figure 8 est une vue en plan de dessus de l'embase,

— la figure 9 est une vue en coupe longitudinale, montrant le compteur et son support, en position de service fixé au sol,

— la figure 10 est une vue analogue à la figure 9 concernant une variante de réalisation.

— la figure 11 est une vue analogue aux figures 9 et 10 concernant une autre variante.

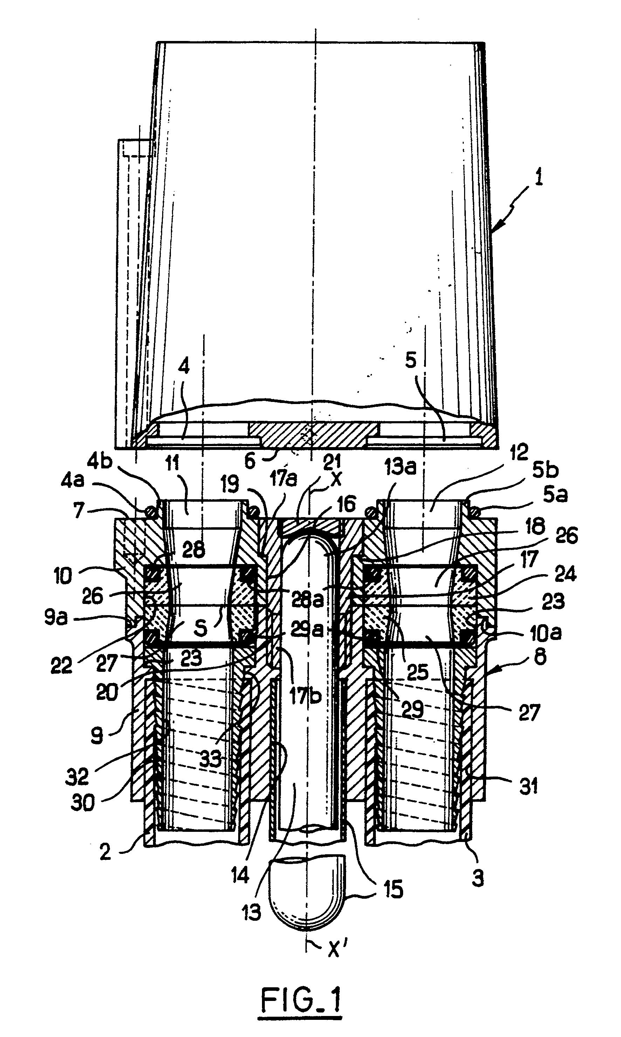

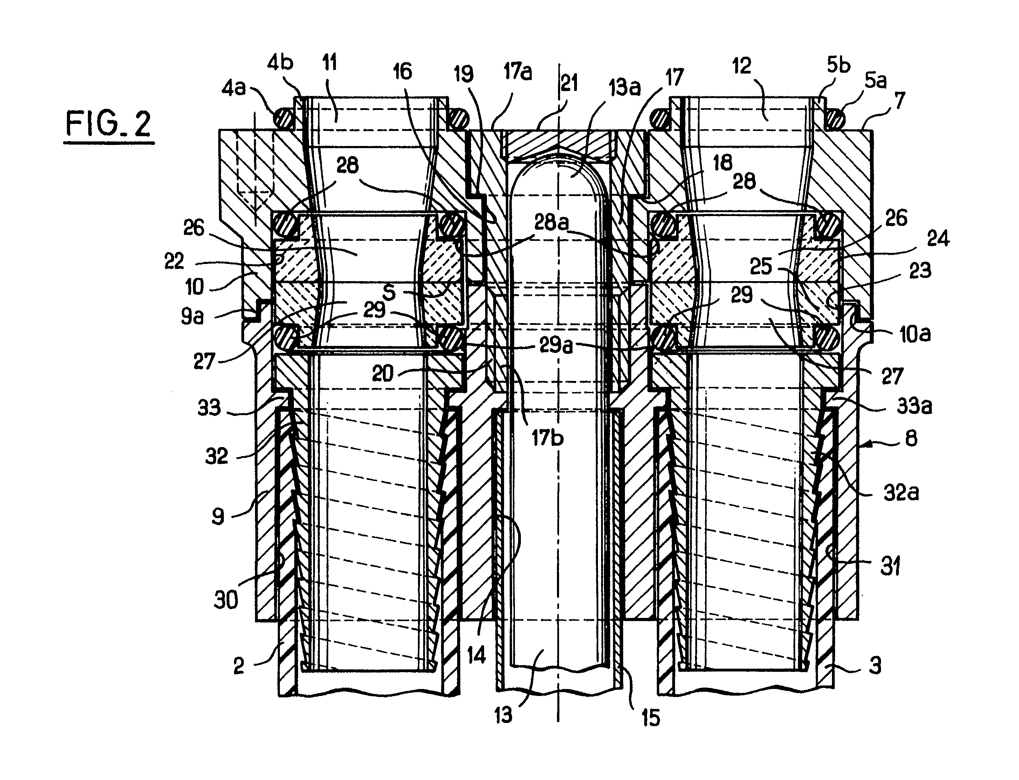

Dans la réalisation des figures 1 et 2, le dispositif de raccordement et de support d'un compteur d'eau 1 comprend un tuyau 2 d'arrivée d'eau au compteur et un tuyau 3 de départ destinés à être raccordés à ce dernier à l'aide de moyens pour permettre, interdire ou dériver le passage de l'eau.

Le compteur d'eau 1 comprend une ouverture 4 d'arrivée d'eau et une ouverture 5 de départ d'eau disposées l'une à côté de l'autre sur une face plane 6 destinée à être plaquée au moyen de goujons (non représentés) solidaires de l'embase 9 à la face supérieure 7 du support 8 du compteur 1.

Ce support 8 comporte une embase fixe 9 dans laquelle sont montés sensiblement parallèlement l'un à l'autre le tuyau 2 d'arrivée et le tuyau 3 de départ de l'eau. Cette embase 9 est surmontée par une platine 10 comportant deux conduits 11, 12 faisant saillie en 4b, 5b au-dessus de la face 7 et destinés à positionner le compteur 1, à positionner et comprimer les joints souples 4a, 5a dans les orifices épaulés 4, 5 de la face 6 dudit compteur et à transporter les calories de la platine 10 vers le compteur 1.

Cette platine 10 est montée en rotation sur l'embase 9 suivant un axe X-X' sensiblement vertical passant entre les deux tuyaux 2, 3, entre une position (comme indiqué sur les figures 1 et 2) dans laquelle les conduits 11, 12 de passage d'eau ménagés dans la platine 10 sont disposés dans l'axe des tuyaux d'arrivée 2 et de départ 3 de l'eau et une position dans laquelle ces conduits 11, 12 de passage d'eau sont décalés angulairement par rapport aux tuyaux d'arrivée 2 et de départ 3 de l'eau de façon à obturer le passage de l'eau entre ces tuyaux et le compteur 1.

Entre les tuyaux d'arrivée 2 et de départ 3 d'eau est fixé un fourreau 15 destiné à recevoir le caloduc 13 et à être enfoui à une certaine profondeur (par exemple 2 mètres) dans le sol. L'extrémité supérieure de ce caloduc 13 est en condition d'échange thermique avec l'embase 9 portant les tuyaux d'arrivée 2 et de départ d'eau 3 et avec la platine rotative 10.

Dans la réalisation représentée sur les figures 1 et 2, l'embase 9 comprend dans le prolongement inférieur de l'axe X-X' de la platine 10, un alésage 14 dans lequel est emboîté le fourreau 15 qui entoure le caloduc 13.

Par ailleurs, la platine 10 comporte dans l'axe X-X' de sa rotation, un alésage 16 dans lequel est monté un manchon 17 dont l'extrémité adjacente à la platine 10 comprend un épaulement annulaire 18 en appui contre un épaulement 19 complémentaire ménagé dans l'alésage 16 de cette platine. L'autre extrémité 17b de ce manchon 17 est vissée dans un taraudage 20 ménagé dans l'embase 9. Ce manchon 17 entoure sensiblement sans jeu l'extrémité 13a du caloduc 13, ce qui permet à celui-ci d'être en condition d'échange thermique avec l'embase 9 et la platine 10, ce manchon 17 servant en outre de pivot pour la rotation de la platine 10. La face inférieure 10a de la platine et la face supérieure 9a de l'embase 9 sont conformées en feuillures périphériques et un faible jeu est ménagé entre celles-ci.

Par ailleurs, l'extrémité 17a du manchon 17 adjacente à la platine 10 est fermée par un bouchon 21 en contact avec l'extrémité 13a du caloduc. Ce bouchon 21 est destiné à venir en contact avec la face 6 du compteur 1 comportant les ouvertures d'arrivée 4 et de départ 5 d'eau, de façon que le caloduc 13 soit en condition d'échange thermique avec le compteur, et à ménager un passage pour introduire ou ôter le caloduc 14.

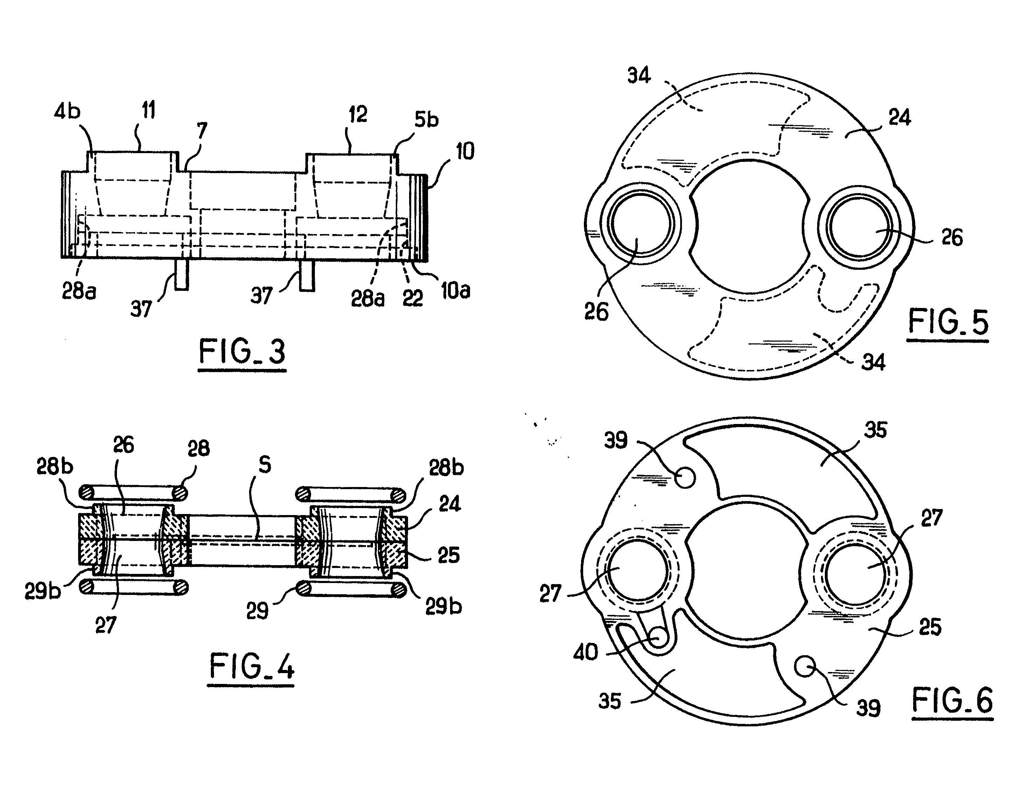

La face 10a de la platine 10 adjacente à l'embase 9 et la face 9a de celle-ci adjacente à la platine 10 comprennent chacune un évidement annulaire 22, 23 dans lequel est logé un anneau en matière inoxydable 24, 25. Chaque évidement annulaire 22, 23 comprend deux évidements circulaires diamétralement opposés 28a et 29a, dans lesquels sont montés des joints souples 28 et 29 qui reçoivent les saillies tubulaires 28b et 29b des anneaux 24 et 25. Avantageusement cette disposition permet de solidariser en rotation les anneaux 24, 25 avec la platine 10 et l'embase 9. Les deux anneaux 24, 25 (voir également les figures 4, 5, 6) présentent chacun deux passages égaux 26, 27 situés respectivement dans le prolongement des deux conduits 11, 12 de la platine 10 et des deux tuyaux 2, 3 portés par l'embase 9. De plus, ces deux anneaux 24, 25 sont en appui l'un contre l'autre suivant une surface plane S.

Ces deux anneaux 24, 25 sont de préférence en alumine. Cette matière est inoxydable et présente l'avantage de pouvoir être usinée de telle sorte que la surface plane de contact S entre les deux anneaux soit parfaitement étanche. Les passages 26, 27 ménagés dans les anneaux 24, 25 sont de préférence conformés en tronc de cône convergent et divergent, comme indiqué sur les figures 2 et 4.

On voit d'autre part sur les figures 5 et 6, que les faces planes des anneaux 24, 25 destinées à être en appui l'une sur l'autre selon la surface S, comportent deux évidements diamétraux 34, 35 remplis de graisse de façon à pouvoir lubrifier la surface de contact S lors de la rotation de la platine 10.

Par ailleurs, comme on le voit sur les figures 1 et 2, les deux anneaux 24, 25 sont montés de façon étanche dans leurs évidements circulaires 28a et 29a, à l'aide de joints annulaires élastiques 28, 29, par exemple en caoutchouc.

Les tuyaux d'arrivée 2 et de départ d'eau 3 sont de préférence en matière plastique telle que le polyéthylène. Ces tuyaux 2, 3 sont montés dans des alésages 30, 31 pratiqués dans l'embase 9. La paroi de ces tuyaux 2, 3 est pressée contre l'alésage 30, 31 correspondant à l'aide d'une vis creuse et conique 32, 32a engagée dans l'évidement 29a de la face de l'embase 9 adjacente à la platine 10.

L'alésage 30, 31 de chaque tuyau 2, 3 est séparé de l'évidement 29a correspondant par un épaulement 33, 33a sur lequel prennent appui la tête de la vis 32, 32a et l'extrémité du tuyau 2, 3. Le trou de chaque vis 32, 32a est conformé de façon que celle-ci puisse être serrée au moyen d'un outil qui s'adapte à son empreinte interne.

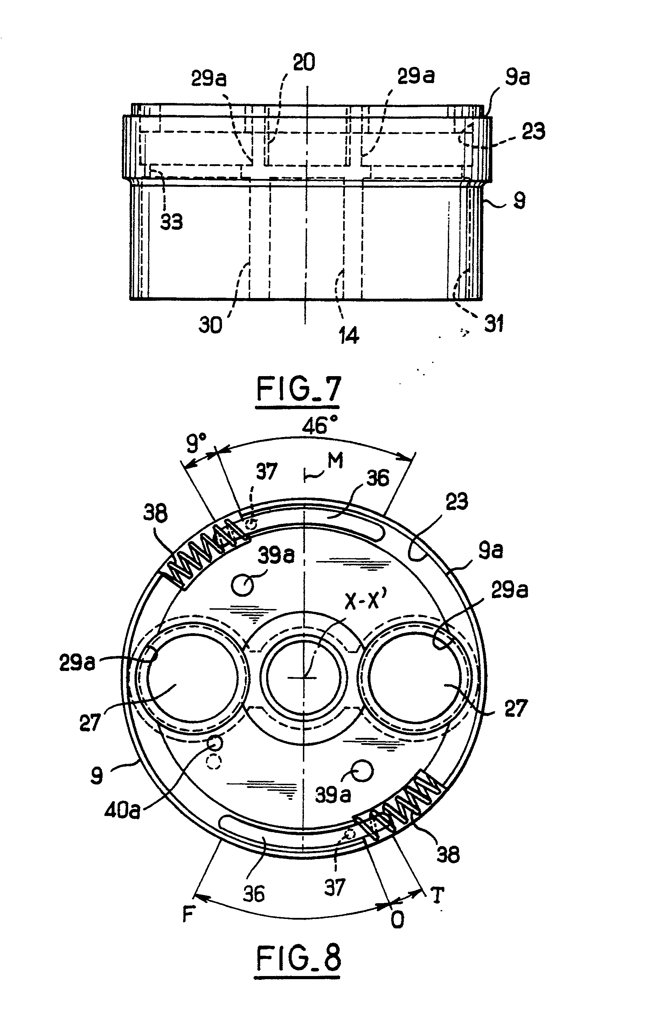

Comme indiqué sur la figure 8, sur sa face 9a adjacente à la platine 10, l'embase 9 comprend deux rainures 36 en arc de cercle diamétralement opposées dans lesquelles circulent deux ergots 37 (voir figure 3) en saillie sur la face 10a de la platine 10 adjacente à l'embase 9.

Ces rainures 36 s'étendent sensiblement de part et d'autre d'un plan M perpendiculaire au plan dans lequel sont situés les axes des tuyaux 2, 3.

Chaque rainure 36 se prolonge, pénètre sous un ressort 38, d'une faible course angulaire par exemple 9°. Chaque ressort 38 est lui-même précontraint dans une rainure moins profonde que les rainures 36. Chaque ergot 37 de la platine 10 ne peut donc rester de façon stable dans la zone de déplacement des ressorts 38.

Les positions occupées par l'ergot 37 en position d'ouverture et de fermeture sont repérées respectivement par les lettres O et F sur la figure 8. Dans la position F, les conduits 11 et 12 sont décalés de 46° par rapport aux tuyaux 2, 3 et sont en vis-à-vis des orifices 39 de l'anneau 25 et 39a de l'embase 9.

Dans cette position, le compteur se vide de l'eau qu'il contient.

On voit sur les figures 8 et 6 que l'embase 9 et l'anneau 25 comportent en outre près du passage 27 de départ d'eau une petite ouverture de passage 40a et 40 qui communique, lorsque les ressorts 38 sont poussés au maximum, avec le conduit 12, créant ainsi une petite fuite d'eau pour tester le bon fonctionnement du compteur 1. En relâchant le compteur 1, les ressorts 38 ramènent automatiquement les ergots 37 donc la platine 10 en position de pleine ouverture. Cette fuite entre l'orifice 12 de départ d'eau et l'extérieur de l'embase, l'orifice 26 d'arrivée d'eau de l'anneau 24 étant partiellement en regard de l'orifice 27 d'arrivée d'eau de l'anneau 25, est obtenue par la position de l'orifice 40 de l'anneau 25 telle que la distance le séparant de l'orifice 27 de départ de l'anneau 25 soit au plus égale au diamètre orifice 27.

L'ensemble constitué par le compteur 1 fixé de façon étanche à la platine 10, elle-même montée en rotation sur l'embase 9 peut être placé dans une enveloppe cylindrique d'axe sensiblement vertical et au moins partiellement enfoui dans le sol, l'embase 9 et le fourreau 15 étant rendus solidaires de cette enveloppe.

Le fonctionnement du dispositif que l'on vient de décrire est le suivant :

Pour couper l'arrivée d'eau au compteur 1, il suffit de faire tourner celui-ci de 46° autour de l'axe X-X' de façon que les ergots 37 de la platine 10 se déplacent entre les positions O et F.

Les principaux avantages de cette structure sont les suivants :

Etant donné que les passages de l'eau sont alignés sur deux axes verticaux faiblement espacés l'un de l'autre, que les moyens d'obturation sont agencés suivant ces deux axes et que les commandes d'ouverture et de fermeture desdits moyens sont réalisées par rotation du compteur autour d'un axe passant entre les deux axes précités, l'ensemble du dispositif présente un faible encombrement en largeur. A titre d'exemple, la distance entre les deux axes des tuyaux 2, 3 peut être réduite à 54 mm.

Ainsi, le dispositif peut être disposé dans une fosse cylindrique dont le diamètre ne dépasse pas 200 mm. Par ailleurs, l'organisation des passages d'eau et des moyens d'obturation suivant deux axes parallèles permet d'insérer entre ceux-ci un caloduc 13 dont l'extrémité est coiffée par un manchon servant de pivot pour la rotation du compteur 1 et de la platine 10. Cette disposition du caloduc permet un échange thermique optimal avec l'ensemble du support 8, y compris le compteur 1 lui-même. On évite ainsi tout risque de gel de l'eau située à l'intérieur du support 8 et du compteur 1.

Grâce à cette excellente protection à l'égard du gel, le support du compteur, ainsi que le compteur lui-même, au lieu d'être enfouis dans le sol, peuvent être situés au-dessus du niveau du sol, ce qui permet une excellente accessibilité au compteur et réduit le coût de la réalisation de la fosse.

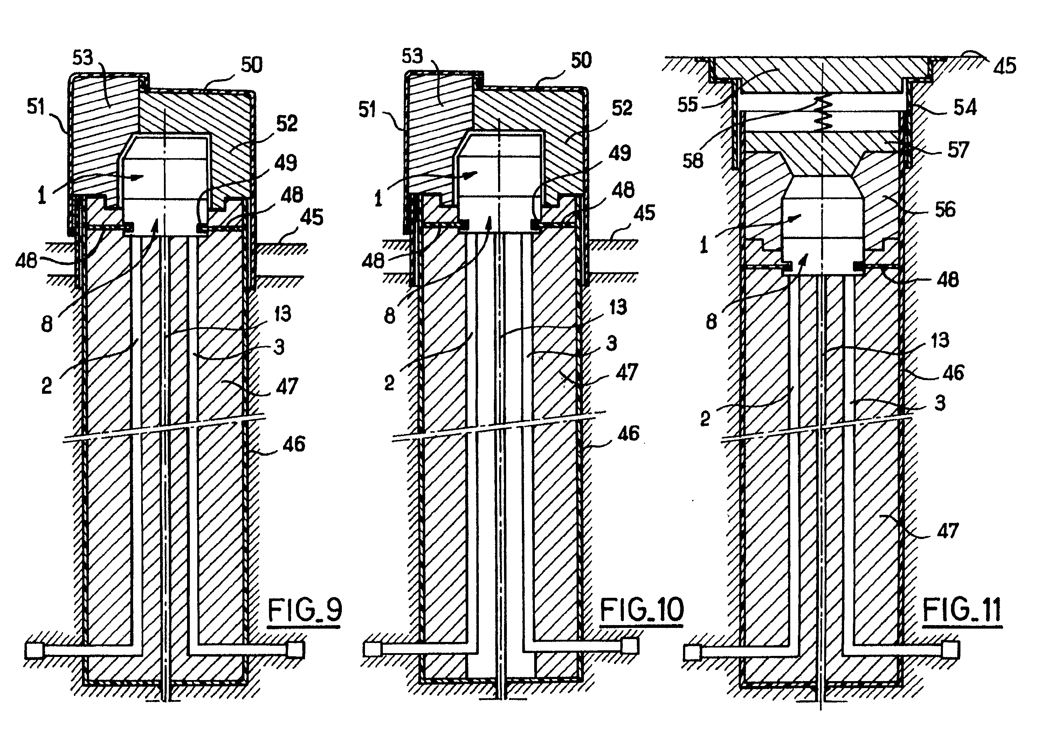

Dans la réalisation de la figure 9, le compteur 1 et son support 8 sont situés au-dessus du niveau du sol 45. Les tuyaux d'arrivée 2 et de départ 3, le caloduc 13 ainsi que le support 8 du compteur sont entourés par une enveloppe cylindrique 46, par exemple en matière plastique enfouie dans une fosse creusée dans le sol. Les tuyaux 2 et 3, ainsi que le caloduc 13 sont entourés par une gaine 47 de protection en matière isolante. Le support 8 du compteur est rendu solidaire de l'enveloppe extérieure 46 par des nervures 48 engagées dans des gorges 49 pratiquées dans le support 8 et empêchant ainsi la rotation de ce support lorsqu'on fait tourner le compteur 1 autour de son axe vertical.

Le compteur 1 situé au-dessus du niveau du sol 45 est recouvert par un coffret 50 en matière plastique dont la base est enfouie dans le sol. Ce coffret 50 comporte une porte latérale 51 qui permet d'accéder au compteur 1. A l'intérieur de ce coffret 50 sont disposés deux blocs 52, 53 en matière isolante telle que du polystyrène expansé qui protègent le compteur du gel. Ces deux blocs 52, 53 sont amovibles. Le bloc 53 adjacent à la porte 51 peut être retiré après ouverture de cette dernière pour permettre la lecture du compteur 1 et éventuellement sa rotation pour couper l'arrivée d'eau.

Cette disposition dans laquelle le compteur peut se trouver à 1 m au-dessus du sol permet un accès facile au compteur 1, tout en assurant une excellente protection à l'égard du gel. Par ailleurs, étant donné que l'enveloppe extérieure 46 présente un diamètre réduit pour les raisons qui ont déjà été expliquées plus haut, la réalisation de la fosse nécessaire pour enfouir cette enveloppe est peu onéreuse.

La figure 10 montre une réalisation identique à celle de la figure 9, excepté que la matière isolante a été supprimée entre le caloduc 13 et les tuyaux 2, 3.

Dans la réalisation de la figure 11, le compteur 1 et son support 8 sont disposés au-dessous du niveau du sol 45, sous un regard 54 fermé par un tampon 55. Les tuyaux d'arrivée 2 et de départ d'eau 3, le caloduc 13, le support 8 et le compteur 1 sont entourés par une enveloppe cylindrique 46 renfermant une gaine en matière isolante 47. Comme dans la réalisation précédente, le support 8 du compteur est rendu solidaire de l'enveloppe extérieure 46 par des nervures 48. Le compteur 1 est entouré par un bloc 56 en matière isolante pouvant être retiré de l'enveloppe 46. Ce bloc 56 est recouvert par un autre bloc 57 amovible en matière isolante qui est relié au tampon 55 par un lien 58. Cette disposition permet également un accès facile au compteur 1.

## Revendications

1. Dispositif de raccordement et de support d'un compteur d'eau (1) comprenant un tuyau (2) d'arrivée d'eau et un tuyau (3) de départ du compteur, ces tuyaux étant raccordés au compteur (1) à l'aide de moyens pour obturer le passage de l'eau, le compteur d'eau (1) comprenant une ouverture d'arrivée (4) d'eau et de départ (5) d'eau disposées l'une à côté de l'autre sur une face (6) destinée à être raccordée à un support (8) dudit compteur, ce support (8) comportant une embase fixe (9) dans laquelle sont montés sensiblement parallèles l'un à l'autre un tuyau d'arrivée (2) et un tuyau de départ (3) de l'eau, le montage du compteur d'eau (1) sur le support (8) étant tel que le compteur d'eau (1) puisse être mis en rotation suivant un axe (X-X') sensiblement vertical passant entre les deux tuyaux (2, 3), caractérisé en ce que cette embase (9) est surmontée par une platine (10) qui comporte deux conduits (11, 12) de passage d'eau destinés à être raccordés respectivement aux ouvertures d'arrivée (4) et de départ (5) du compteur, cette platine (10) étant montée en rotation sur ladite embase (9) suivant l'axe (X-X') sensiblement vertical passant entre les deux tuyaux (2, 3), entre une position dans laquelle ces conduits (11, 12) de passage d'eau ménagés dans la platine (10) sont disposés dans l'axe des tuyaux d'arrivée (2) et de départ (3) de l'eau et une position dans laquelle ces conduits (11, 12) de passage d'eau sont décalés angulairement par rapport aux tuyaux d'arrivée (2) et de départ (3) de l'eau de façon à obturer le passage de l'eau entre ces tuyaux, le compteur (1) servant de moyen de préhension pour commander le circuit d'eau et pouvant se déplacer en rotation d'un angle tel qu'il se produise une obturation du passage de l'eau entre lesdits tuyaux (2, 3).

2. Dispositif conforme à la revendication 1, caractérisé en ce que la platine (10) comporte dans l'axe de sa rotation un alésage (16) dans lequel est monté un manchon (17) dont l'extrémité adjacente à la face (7) de la platine (10) comprend un épaulement annulaire (18) en appui contre un épaulement complémentaire (19) ménagé dans l'alésage de cette platine, un taraudage permettant de recevoir un bouchon (21) de diamètre supérieur à celui de l'alésage du manchon (17), l'autre extrémité (17b) de ce manchon étant vissée dans un taraudage (20) ménagé dans l'embase (9).

3. Dispositif conforme à la revendication 2, caractérisé en ce que l'embase (9) comprend dans le prolongement inférieur de l'axe de rotation de la platine (10), un alésage (14) dans lequel est emboîté un tube fourreau (15) destiné à être enfoui dans le sol et à recevoir un caloduc (13) pouvant être introduit par le manchon (17) après enlèvement du bouchon (21).

4. Dispositif conforme à la revendications 3, caractérisé en ce que la cavité s'étendant de l'extrémité inférieure du tube fourreau (15) à la face inférieure du bouchon (21) contient un tube caloduc (13) dont l'extrémité inférieure est en condition d'échange thermique avec le sol et dont l'extrémité supérieure (13a) est en condition d'échange thermique avec l'embase (9), le manchon (17), la platine (10), et le bouchon (21) qui le coiffe et permet de le remplacer.

5. Dispositif conforme à l'une des revendications 2 à 4, caractérisé en ce que le bouchon (21) crée un lien thermique entre l'extrémité (13a) du caloduc (13) et la face (6) du compteur (1) comportant les ouvertures d'arrivée (4) et de départ d'eau (5).

6. Dispositif conforme à l'une des revendications 1 à 5, caractérisé en ce que les faces en vis-à-vis de la platine (10) et de l'embase (9) contiennent chacune un anneau (24, 25) en matière inoxydable, ces deux anneaux étant en appui mutuel suivant une surface plane (S) et comportant chacun deux perçages de diamètres sensiblement identiques (26) et (27) susceptibles d'établir un circuit continu respectivement entre les tuyaux (2, 3) et les orifices (11, 12) de la platine (10), tandis que l'anneau (25) comporte, outre des orifices auxiliaires (39), en regard d'orifices (39a) de l'embase (9) qui permettent la vidange du compteur lors de l'interruption du circuit, un orifice (40), séparé de l'orifice (27) de départ d'eau d'une distance au plus égale au diamètre dudit orifice (27), qui permet de créer une fuite entre l'orifice de départ (12) et l'extérieur de l'embase (9) à travers un orifice (40a) de cette dernière.

7. Dispositif conforme à la revendication 6, caractérisé en ce que les deux anneaux (24, 25) sont en alumine et comportent chacun deux saillies (28b, 29b) entourant les passages (26, 27) et permettant d'aménager ces passages en troncs de cônes de façon à obtenir deux convergents-divergents.

8. Dispositif conforme à la revendication 7, caractérisé en ce que les deux anneaux (24, 25) sont montés de façon étanche dans les évidements circulaires (28a), (29a) à l'aide de joints annulaires élastiques (28, 29) entourant les saillies (28b, 29b) desdits anneaux (24, 25) qui se trouvent ainsi solidaires en rotation respectivement de la platine (10) et de l'embase (9).

9. Dispositif conforme à l'une des revendications 1 à 8, caractérisé en ce que les tuyaux d'arrivée (2) et de départ d'eau (3) sont en matière plastique, sont emboîtés dans des alésages (30, 31) de l'embase (9) et en butée contre des épaulements (33, 33a) ménagés à l'extrémité supérieure de ceux-ci et sont dilatés par des vis creuses coniques (32, 32a), introduites dans lesdits tuyaux (2, 3) par les évidements circulaires (29, 29a) de la face adjacente à la platine (10) de l'embase (9) et prenant appui par leur partie supérieure en forme de collerette sur la face supérieure des épaulements (33, 33a).

10. Dispositif conforme à l'une des revendications 1 à 9, caractérisé en ce que l'embase (9) comprend sur sa face adjacente à la platine (10) deux rainures (36) en arcs de cercle diamétralement opposées dans lesquelles peuvent se déplacer deux ergots (37) solidaires de la platine (10) dont ils limitent l'angle de rotation par rapport à l'embase (9).

11. Dispositif conforme à la revendication 10, caractérisé en ce que chaque rainure (36, 36) en arc de cercle pénètre d'une faible course angulaire sous un ressort (38) lui-même précontraint dans une rainure moins profonde que les rainures (36), de sorte que les ergots (37) ne peuvent rester de façon stable dans la rainure des ressorts (38).

12. Dispositif conforme aux revendications 1 à 9, caractérisé en ce que la face (7) de la platine (10) comporte deux saillies (4b, 5b) entourant les orifices (11, 12) et destinées à positionner le compteur (1), à positionner et comprimer les joints souples (4a, 5a) dans les orifices épaulés (4, 5) de la face (6) dudit compteur et à transférer les calories de la platine (10) vers le compteur (1).

13. Dispositif conforme à l'une des revendications 1 à 12, caractérisé en ce que l'ensemble constitué par le compteur (1) fixé au support (8) lui-même fixé aux tuyaux d'arrivée (2) et de départ (3) de l'eau et au tube fourreau (15) est entouré d'un manchon (47) en matériau thermiquement isolant et placé dans une enveloppe cylindrique (46) d'axe sensiblement vertical et au moins partiellement enfouie dans le sol, le support (8) étant rendu solidaire de cette enveloppe par serrage du tube fourreau (15) dans le fond de l'enveloppe (46).

14. Dispositif conforme à la revendication 13, caractérisé en ce que le support (8) est rendu solidaire de l'enveloppe (46) au moyen de nervures (48) s'étendant entre l'enveloppe et le support.

15. Dispositif conforme à l'une des revendications 13 ou 14, caractérisé en ce que le compteur (1) est disposé au-dessus du niveau du sol et est recouvert par un coffret (50) muni d'une porte latérale (51), le compteur (1) étant entouré par des blocs (52, 53) amovibles en matière thermiquement isolante.

16. Dispositif conforme à l'une des revendications 13 ou 14, caractérisé en ce que le compteur (1) est disposé au-dessous du niveau du sol, dans un regard (54) fermé par un tampon de visite (55), le compteur (1) étant entouré par des blocs (56, 57) amovibles en matière isolante.

## Patentansprüche

1. Vorrichtung zum Anschließen und zum Haltern eines Wasserzählers (1), mit einem Wasserzufuhrrohr (2) sowie einem Abgangsrohr (3) des Wasserzählers, wobei diese Rohre über Mittel zum Absperren des Wasserdurchganges mit dem Zähler (1) verbunden sind, wobei der Wasserzähler (1) eine Wassereinlaßöffnung (4) sowie eine Wasserabgangsöffnung (5) umfaßt, welche nebeneinander auf einer Fläche (6) angeordnet sind, die dazu bestimmt ist, an einen Träger (8) dieses Zählers angeschlossen zu sein, wobei dieser Träger (8) einen festen Sockel (9) umfaßt, in welchem ein Wasserzufuhrrohr (2) sowie ein Wasserabgangsrohr (3) im wesentlichen parallel zueinander montiert sind, wobei der Wasserzähler (1) derart auf dem Träger (8) aufgebaut ist, daß der Wasserzähler (1) um eine im wesentlichen sekrechte Achse (X-X'), welche zwischen den beiden Rohren durchläuft, gedreht werden kann, **dadurch gekennzeichnet daß** dieser Sockel (9) von einer Platte (10) überragt wird, die zwei Wasserdurchgangsleitungen (11, 12) umfaßt, welche dazu bestimmt sind, an die Zufuhröffnung (4) bzw. an die Abgangsöffnung (5) des Zählers angeschlossen zu werden, wobei diese Platte (10) auf diesem Sockel (9) um eine im wesentliche senkrechte Achse (X-X'), welche zwischen den beiden Rohren (2, 3) durchläuft, drehbar montiert ist zwischen einer Stellung, in welcher die in der Platte (10) eingerichteten Wasserdurchgangsleitungen (11, 12) in der Achse der Wasserzufuhrrohre (2) und der Wasserabgangsrohre (3) angeordnet sind, und einer Stellung, in welcher diese Wasserdurchgangsleitungen (11, 12) in Bezug auf das Wasserzufuhrrohr (2) und das Wasserabgangsrohr (3) so winkelversetzt sind, daß der Wasserdurchgang zwischen den Rohren abgesperrt ist, wobei der Zähler (1) als Greifmittel zum Steuern des Wasserkreises dient und sich drehbar um einen solchen Winkel bewegen kann, daß der Wasserdurchgang zwischen den Rohren (2, 3) abgesperrt wird.

2. Vorrichtung nach Anspruch 1, dadurch gekennzeichnet, daß in ihrer Drehungachse die Platte (10) eine Bohrung (16) umfaßt, in welcher eine Muffe (17) montiert ist, wovon das der Fläche (7) der Platte (10) benachbarte Ende eine ringförmige Schulter (18) umfaßt, die sich gegen eine zusätzliche, in der Bohrung dieser Platte eingerichtete Schulter (19) stützt, wobei ein Innengewinde es ermöglicht, einen Stöpsel (21) aufzunehmen, dessen Durchmesser größer ist als derjenige der Bohrung der Muffe (17), und das andere Ende (17b) dieser Muffe in ein in dem Sockel (9) angebrachtes Innengewinde (20) eingeschraubt ist.

3. Vorrichtung nach Anspruch 2, Dadurch gekennzeichnet, daß der Sockel (9) in der unteren Verlängerung der Drehachse der Platte (10) eine Bohrung (14) umfaßt, in welcher ein Hüllrohr (15) eingesteckt ist, das dazu bestimmt ist, in dem Boden vergraben zu werden sowie eine Warmwasserleitung (13) aufzunehmen, welche nach Entfernung des Stöpsels (21) durch die Muffe (17) eingeführt werden kann.

4. Vorrichtung nach Anspruch 3, dadurch gekennzeichnet, daß der von dem unteren Ende des Hüllrohres (15) bis zur unteren Fläche des Stöpsels (21) sich erstreckende Hohlraum ein Warmwasserrohr (13) enthält, dessen unteres Ende im Wärmeaustauschzustand mit dem Boden ist und dessen oberes Ende (13a) im Wärmeaustauschzustand mit dem Sockel (9), der Muffe (17), der Platte (10) sowie dem Stöpsel (21) ist, der es überragt und seine Ersetzung ermöglicht.

5. Vorrichtung nach einem der Ansprüche 2 bis 4, dadurch gekennzeichnet, daß der Stöpsel (21) ein thermisches Bindeglied zwischen dem Ende (13a) des Warmwasserrohres (13) und der Fläche (6) des Zählers (1), welche die Wasserzufuhröffnung sowie die Wasserabgangsöffnung umfaßt, bildet.

6. Vorrichtung nach einem der Ansprüche 1 bis 5, dadurch gekennzeichnet, daß jede der Flächen, welche gegenüber der Platte (10) und dem Sockel (9) liegen, einen Ring (24, 25) aus einem rostfreien Material enthält, wobei diese beiden Ringe entlang einer ebenen Fläche (S) sich gegenseitig abstützen und jeder Ring zwei Bohrungen (26) und (27) von im wesentlichen identischem Durchmesser umfaßt, welche dazu geeignet sind, zwischen den Rohren (2, 3) und den Öffnungen (11, 12) der Platte (10) einen kontinuierlichen Kreis herzustellen, während der Ring (25) außer den Hilfsöffnungen (39), welche gegenüber Öffnungen (39a) des Sockels (9) angeordnet sind und die Entleerung des Zählers bei der Unterbrechung des Kreises ermöglichen, eine Öffnung (40) umfaßt, welche von der Öffnung (27) für den Wasserabgang in einer Entfernung liegt, welche dem Durchmesser dieser Öffnung (27) höchstens entspricht, wobei diese Öffnung die Bildung eines Lecks zwischen der Wasserabgangsöffnung (12) und dem Äußeren des Sockels (9) durch eine Öffnung (40a) desselben ermöglicht.

7. Vorrichtung nach Anspruch 6, dadurch gekennzeichnet, daß die beiden Ringe (24, 25) aus Aluminiumoxid bestehen und daß jeder zwei die Durchgänge (26, 27) umgebende Vorsprünge (28b, 29b) umfaßt, welche es ermöglichem diese kegelstumpfförmigen Durchgänge so einzurichten, daß zwei konvergierende-divergierende Elemente erhalten werden.

8. Vorrichtung nach Anspruch 7, dadurch gekennzeichnet, daß die beiden Ringe (24, 25) in den kreisförmigen Aussparungen (28a), (29a) mittels elastischer Dichtringe (28, 29) dicht montiert sind, welche die Vorsprünge (28a, 28b) dieser Ringe (24, 25) umgeben, wovon der eine so mit der Platte (10) und der andere mit dem Sockel (9) drehfest verbunden sind.

9. Vorrichtung nach einem der Ansprüche 1 bis 8, dadurch gekennzeichnet, daß das Wasserzufuhrrohr (2) sowie das Waserrabgangsrohr (3) aus einem Kunststoff bestehen, in Bohrungen (30, 31) des Sockels (9) eingesteckt sind und gegen am oberen Ende derselben eingerichtete Schultern (33, 33a) anschlagen sowie durch konische Hohlschrauben (32, 32a) aufgeweitet sind, welche in diese Rohre (2, 3) durch die kreisförmigen Aussparungen (29, 29a) der der Platte (10) des Sockels (9) benachbarten Fläche eingeführt sind und über ihren oberen kragenförmigen Teil sich auf der oberen Fläche der Schulter (33, 33a) abstützen.

10. Vorrichtung nach einem der Ansprüche 1 bis 9, dadurch gekennzeichnet, daß die der Platte (10) benachbarte Fläche des Sockels (9) zwei kreisbogenförmige Rillen (36) umfaßt, welche diametral einandergegenüberliegen und in welchen zwei Nocken (37) sich bewegen können, welche mit der Platte (10) fest verbunden sind und deren Drehwinkel bezüglich des Sockels (9) begrenzen.

11. Vorrichtung nach Anspruch 10, dadurch gekennzeichnet, daß jede kreisbogenförmige Rille (36, 36) um einen kleinen Winkel- betrag unter eine Feder (38) eindringt, welche selber in einer weniger tiefen Rille als die Rillen (36) unter Vorspannung steht, so daß die Nocken (37) in der Rille der Federn (38) nicht stabil bleiben können.

12. Vorrichtung nach den Anssrüchen 1 bis 9, dadurch gekennzeichnet, daß die Fläche (7) der Platte (10) zwei die Öffnungen (11, 12) umgebende Vorsprünge (4b, 5b) umfaßt, welche dazu bestimmt sind, den Zähler (1) einzustellen, die biegsamen Dichtringe (4a, 5a) in den mit Schultern versehenen Öffnungen (4, 5) der Fläche (6) dieses Zählers zu komprimieren sowie die Wärme von der Platte (10) zu dem Zähler (1) zu überführen.

13. Vorrichtung nach einem der Ansprüche 1 bis 12, dadurch gekennzeichnet, daß die durch den Zähler (1) gebildete Gruppe, die an dem Träger (9) befestigt ist, welcher seinerseits an dem Wasserzufuhrrohr (2), an dem Wasserabgangsrohr (3) sowie an dem Hüllrohr (15) befestigt ist, von einer Muffe (47) umgeben ist, die aus einem thermisch isolierenden Material besteht und in einer zylindrischen Hülle (46) angeordnet ist, deren Achse im wesentlichen senkrecht und wenigstens teilweise in dem Boden vergraben ist, wobei der Träger (8) mit dieser Hülle durch Festspannen des Hüllrohres (15) auf dem Boden der Hülle (46) fest verbunden ist.

14. Vorrichtung nach Anspruch 13, dadurch gekennzeichnet, daß der Träger (8) mit der Hülle (46) mittels sich zwischen der Hülle und dem Träger erstreckenden Rippen (48) fest verbunden ist.

15. Vorrichtung nach Anspruch 13 oder 14, dadurch gekennzeichnet, daß der Zähler (1) oberhalb der Bodenhöhe angeordnet ist und von einem mit einer Seitentür (51) versehenen Kästchen (50) umgeben ist, wobei der Zähler (1) von abnehmbaren Blöcken (52, 53) aus einem thermisch isolierenden Material umgeben ist.

16. Vorrichtung nach Anspruch 13 oder 14, dadurch gekennzeichnet, daß der Zähler (1) unter dem Bodenniveau in einem durch einen entfernbaren Verschluß (55) verschlossenen Sehloch (54) angeordnet ist, wobei der Zähler (1) von abnehmbaren Blöcken (56, 57) aus einem isolierenden Material umgeben ist.

## Claims

1. A device for connecting and supporting a water-meter (1) comprising a water-inlet pipe (2) and a water-outlet pipe (3), the said pipes being connected to the meter (1) by means for shutting off the flow of water, the water-meter (1) comprising a water-inlet (4) and a water-outlet (5) — apertures arranged side by side upon a face (6) designed to be connected to a support (8) of the said meter, the said support comprising a stationary seat (9) wherein a water-inlet pipe (2) and a water-outlet pipe (3) are mounted substantially in parallel with each other, the mounting of the water-meter (1) on the support (8) being such that the water-meter can be rotated according to a substantially vertical axis (X-X') passing between the two pipes (2, 3), characterized in that the said seat (9) is surmounted by a plate (10) comprising two water conduits (11, 12) designed to be connected respectively to the meter-inlet (4) and -outlet (5) apertures, the said plate (10) being mounted to rotate on the said seat (9) about the axis (X-X') which is substantially vertical and passes between the water-conduits (11, 12), arranged in the plate (10), are located in the axes of the water-inlet (2) and -outlet (3) pipes, and a position in which the said water-conduits are offset angularly in relation to the water-inlet (2) and -outlet (3) pipes in such a manner as to shut off the flow of water between these pipes, the meter (1) serving as a holding means for controlling the water-circuit and being movable in rotation according to an angle and such that it provides a closure of the water flow between said pipes (2, 3).

2. A device according to claim 1, characterized in that the plate (10) comprises, in the axis of its rotation, a bore (16) carrying a sleeve (17), the end of which adjacent to the face (7) of the plate (10) carries an annular shoulder (18) bearing against a complementary shoulder (19) arranged in the bore in the plate, an internal thread, adapted to accomodate a plug (21) larger in diameter than the bore in sleeve (17), the other end (17b) of this sleeve being screwed to an internal thread (20) arranged in the seat (9).

3. A device according to claim 2, characterized in that the seat (9) comprises, in the lower extension of the axis of rotation of the plate (10), a bore (14) to which is fitted a sheath tube (15) designed to be buried in the ground and to accomodate a heat pipe (13) which is introduced into the sleeve (17) after removal of the plug (21).

4. A device according to claim 3, characterized in that the cavity extending from the lower end of the sheath tube (15) to the lower face of the plug (21) contains a heat tube (13), the lower end of which is in a condition of heat-exchange with the ground, while the upper end (13a) is in a condition of heat-exchange with the seat (9), the sleeve (17), the plate (10), and the plug (21) which caps it and permits its replacement.

5. A device according to any of claims 2 to 4, characterized in that the plug (21) creates a thermal link between the end (13a) of the heat-pipe (13) and the face (6) of the meter (1) comprising the water-inlet (4) and -outlet (5) apertures.

6. A device according to any of claims 1 to 5, characterized in that the opposite faces of the plate (10) and of the seat (9) each contain a ring of inoxidizable material, the two rings being in mutual support along a flat surface (S) and each comprising two perforations (26, 27) of substantially the same diameter adapted to establish a continuous circuit respectively between pipes (2, 3) and apertures (11, 12) in the plate (10), whereas the ring (25) comprises, in addition to auxiliary orifices (39), facing orifices (39a) in the seat (9) which allow the meter to be drained away if the circuit is interrupted, an orifice (40) separated from the wateroutlet orifice (27) by a distance at the most equal to the diameter of the said orifice (27), which makes it possible to create a leak between the outlet-orifice (12) and the exterior of the seat (9) through an orifice (40a) in the latter.

7. A device according to claim 6, characterized in that the two rings (24, 25) are made of alumina and each comprise two projections (28b, 29b) surrounding the passages (26, 27) and making it possible to arrange these passages as truncated cones in such a manner as to obtain two convergents-divergents.

8. A device according to claim 7, characterized in that the two rings (24, 25) are sealed into circular recesses (28a, 29a) with the aid of resilient annular gaskets (28, 29) surrounding the projections (28b, 29b) on the said rings (24, 25) which are thus integral in rotation with the plate (10) and the seat (9) respectively.

9. A device according to any of claims 1 to 8, characterized in that the water-inlet (2) and water-outlet (3) pipes are made of plastic, are fitted into bores (30, 31) in the seat (9) and bear against shoulders (33, 33a) arranged at the upper end thereof, and are expanded by hollow conical screws (32, 32a) introduced into the said pipes (2, 3) through the circular recesses (29, 29a) in the surface of the seat (9) adjacent to the plate (10), the upper part thereof, in the form of a collar, bearing upon the upper surface of the shoulders (33, 33A).

10. A device according to any of claims 1 to 9, characterized in that the seat (9) carries, in its surface adjacent to the plate (10), two arcuate grooves (36) diametrically opposite each other in which it is possible for two pins (37), integral with the plate (10), to move, the angle of rotation thereof being limited thereby in relation to the seat (9).

11. A device according to claim 10, characterized in that each arcuate groove (36, 36) enters, according to a small angular path, under a spring (38) which is itself pre-stressed in a groove not as deep as the grooves (36), in such a manner that the pins (37) cannot remain stable in the spring grooves (38).

12. A device according to claims 1 to 9, characterized in that the face (7) of the plate (10) comprises two projections (4b, 5b) surrounding the orifices (11, 12) and designed to position the meter (1), to position and compress the flexible gaskets (4a, 5a) in the shouldered orifices (4, 5) in the face (6) of the said meter, and to transfer calories from the plate (10) to the meter (1).

13. A device according to any of claims 1 to 13, characterized in that the assembly consisting of the meter (1), secured to the support (8), which is in turn secured to water-inlet (2) and -outlet (3) pipes and to the sheath tube (15), is surrounded by a lining (47) made of a heat-insulating material and placed in a cylindrical envelope (46) having a substantially vertical axis and at least partly buried in the ground, the support (8) being made integral with this envelope by clamping the sheath tube (15) at the bottom of the enveloppe (46).

14. A device according to claim 13, characterized in that the support (8) is made integral with the envelope (46) by means of ribs (48) running between the envelope and the support.

15. A device according to any of claims 13 or 14, characterized in that the meter (1) is located above ground-level and is covered with a box (50) equipped with a lateral door (51), the meter (1) being surrounded by detachable blocks (52, 53) made of a heat-insulating material.

16. A device according to any of claims 13 or 14, characterized in that the meter (1) is arranged below ground-level in an inspection-hole (54) covered by a plug (55), the said meter being surrounded by detachable blocks (56, 57) made of an insulating material.

FIG.1

FIG. 2

FIG_3

FIG_4

FIG_5

FIG_6

EP 0 287 407 B1

13

FIG_7

FIG_8

FIG_9

FIG_10

FIG_11

EP 0 287 407 B1